# EUROPEAN PATENT SPECIFICATION

(11) **EP 1 801 944 B1**
(45) Date of publication and mention of the grant of the patent: **06.08.2008**
(21) Application number: 06076293.7
(22) Date of filing: 22.06.2006
(51) Int. Cl.: H02G 3/12

(54) **Electrical box with ring**
Elektrodose mit Ring
Boîte électrique avec anneau

(30) Priority: 21.12.2005 EP 05077964
(43) Date of publication of application: 27.06.2007
(73) Proprietor: ABB B.V., 6716 AA Ede (NL)
(72) Inventor: Renckens, Thomas Philippus, 3742 ND Baarn (NL)
(74) Representative: Ferguson, Alexander

(56) References cited:
- EP-A- 0 893 866
- DE-A- 3 403 053
- DE-U- 20 217 322

## Description

The invention relates to a box for electric wirings, to be placed in the wall of a building.

When wiring, such boxes, usually flush-type boxes, are placed in a hole made beforehand in the wall in question, wherein they are connected by means of a spout or gate to the wiring pipe that has already been accommodated in the wall. At the edge of the opening of the box facing the space in question a mounting ring is placed, which is provided with threaded holes/ -bushes. By means of little bolts the switch- and/or connection components to be disposed in/on the flush-type box can be attached to the box.

(A) EP 0 893 866 A1 discloses an installation box according to claim 1. The box comprises an adjustment ring that can be attached to the inner side of the box in order to adjust the depth of the installation box.

In a known embodiment the box, at the location of the edge of the opening, is provided with nut members, integrally formed or in the shape of inlaid nut plates, for cooperation with the little bolts. Said embodiment requires particular measures when forming the boxes manufactured by injection moulding. It is furthermore disadvantageous that the orientation of the nut members with respect to the spout of the box is always the same, as a result of which an inadvertent askew position of the box, wherein the spout is not purely horizontally or vertically oriented, results in an askew position of the components.

In another known flush-type box use is made for that purpose of a mounting ring, which is provided with holes for attachment screws for the components and which by snapping is attached in the edge of the box, and then is rotatable so that a correct orientation of the mounting ring can be set. A drawback thereof is, however, that the orientation after wiring and during later use of the components, as a result of the forces exerted thereon, can as yet be changed, and the components and cover plate become askew.

It is an object of the invention to improve on this.

It is another object of the invention to provide a box of the type mentioned in the preamble having a simple and adjustable attachment of a mounting ring.

It is another object of the invention to provide a box of the type mentioned in the preamble with mounting ring wherein the box is easy to manufacture.

From one aspect the invention provides an assembly of a spoutless box for electric wirings, according to claim 1.

The electrical fitter is given the opportunity of setting the position of the mounting ring on the already placed box, so that an oblique orientation of the box in the plane of the wall is not transferred to the attachment means for the components in a permanent way.

In a preferred embodiment the first and second fixing means are adapted for fixing said orientation in an oblique angle in the range of at least approximately 0-45 degrees, so that the electrical fitter is given a rather wide choice in setting possibilities.

Preferably the first and second fixing means are adapted for fixing said orientation in an oblique angle in the range of at least approximately 0-90 degrees, as a result of which the electrical fitter is in fact able to compensate almost any oblique angle.

Ease of fitting is further enhanced when the angle in the said range is at least almost continuously variable.

In a simple embodiment the first connection means are formed as one unity with the mounting ring, so that parts are economised on.

In another simple embodiment the second connection means are formed as one unity with the edge, thus further economising on parts.

In an easy-to-assemble embodiment the first and second connection means are adapted for realising a snap connection for stopping the mounting ring in a direction away from the bottom wall.

If the first and second fixing means have been formed in radially facing surfaces on the mounting ring and the wall, the placement is facilitated.

Preferably the first and/or second fixing means comprise a series of teeth, as a result of which the electrical fitter is able to set the correct angle in a well-organised and controlled manner.

In a simple embodiment thereof the first or the second fixing means comprise a series of teeth and the second or first fixing means, respectively, comprise one or several teeth meshing therewith.

In a further embodiment thereof the series of teeth is provided at the mounting ring. It is easiest to mould the series of teeth at the mounting ring.

When the series of teeth extends over said angle range (0-45 degrees or 0-90 degrees) the electrical fitter has more freedom in placing the mounting ring, thus increasing the ease of fitting.

In a further embodiment the one or several teeth are provided at the box, for which purpose the moulding process can easily be adjusted.

In case of said range of 360 degrees some teeth may be present which in circumferential direction are situated at said certain angle at spaced apart positions. The series of teeth on the mounting ring can then remain limited.

The invention further provides a mounting ring suitable and intended for the assembly according to the invention.

The invention furthermore provides a box suitable and intended for the assembly according to the invention.

The aspects and measures described and/or shown in the application may where possible also be used individually. Said individual aspects and other aspects may the subject of divisional patent applications related thereto.

The invention will be elucidated on the basis of an exemplary embodiment shown in the attached drawings, in which:
Figure 1A shows an exemplary embodiment of a mounting ring for an assembly according to the invention, in perspective;
Figure 1B shows the mounting ring of figure 1A, in side view;
Figure 2 shows an example of an assembly according to the invention, with the mounting ring of figures 1A and 1B and a flush-type box;
Figure 3 shows the assembly of figure 2, placed in a hole in a wall; and
Figures 4A and 4B show cross-sections IVA and IVB, respectively, in figures 3 and 2.

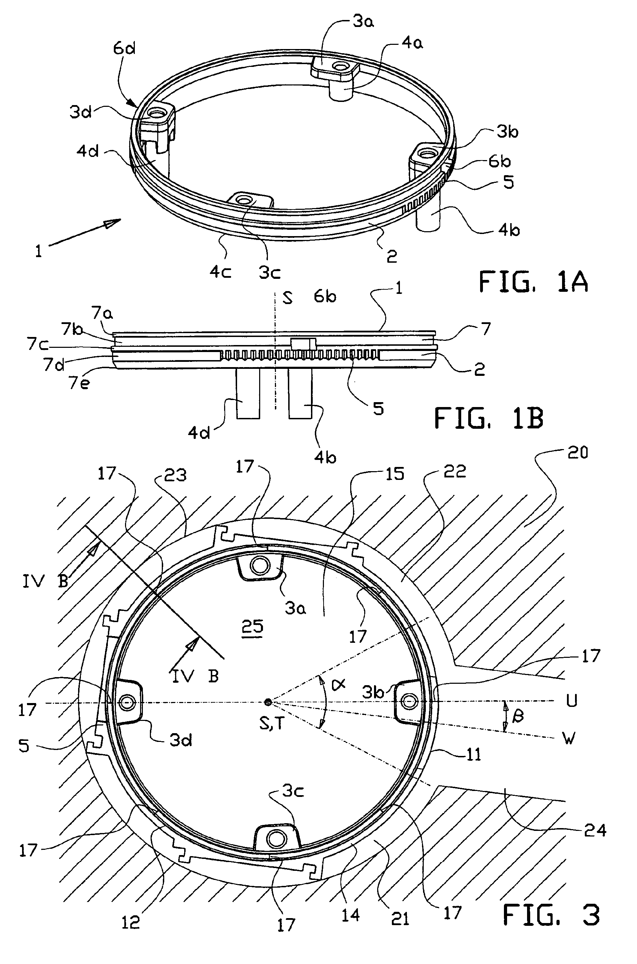

The mounting ring 1 of figures 1A and 1B is circular and comprises an annular body 2, having a centre line S, and is manufactured through injection moulding from a suitable synthetic material, for instance polypropylene. At the inner circumference the annular body 2 comprises four attachment plates 3a-d, which are positioned at 90 degrees from one another in circumferential direction. The attachment plates 3a-d are provided with through-holes for little bolts and the like, for attachment of electrical components that are not further shown to the mounting ring 1. The attachment plates 3a-d are furthermore provided with bushes 4a-d, wherein the bushes 4b and 4d are longer than the bushes 4a and 4c. Under the attachment plates 3b and 3d accommodation spaces 6b, 6d are provided that are accessible radially at the outside, for placement of nut plates that are not further shown. Alternatively the box may be adapted for screwing the screws used for attaching the components directly into the synthetic material of the ring 2 and/or the box 10 (yet to be discussed), in which case the nut plates are dispensed with.

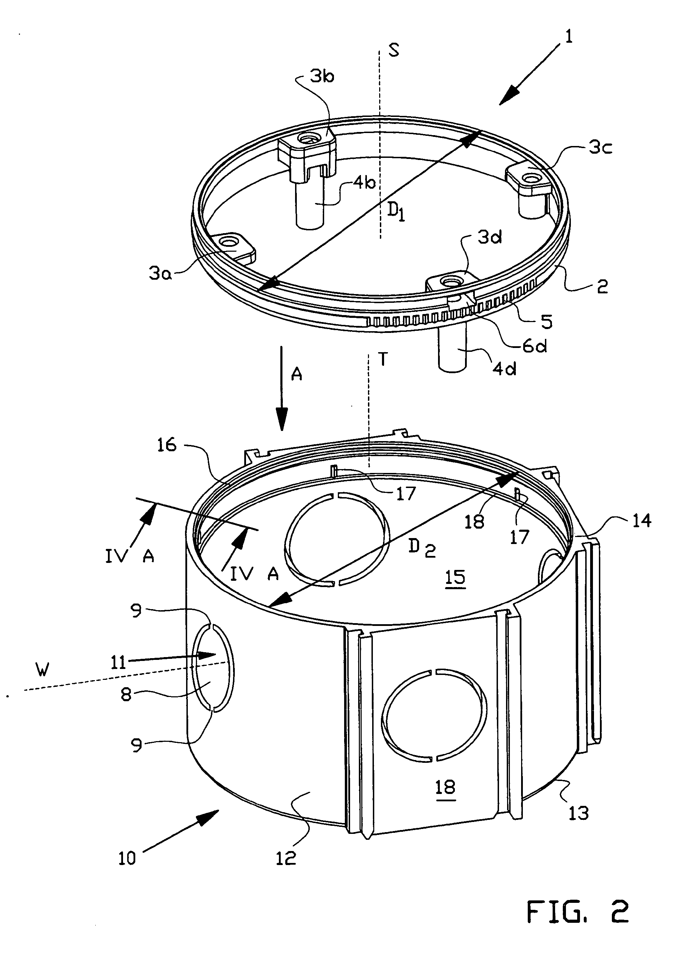

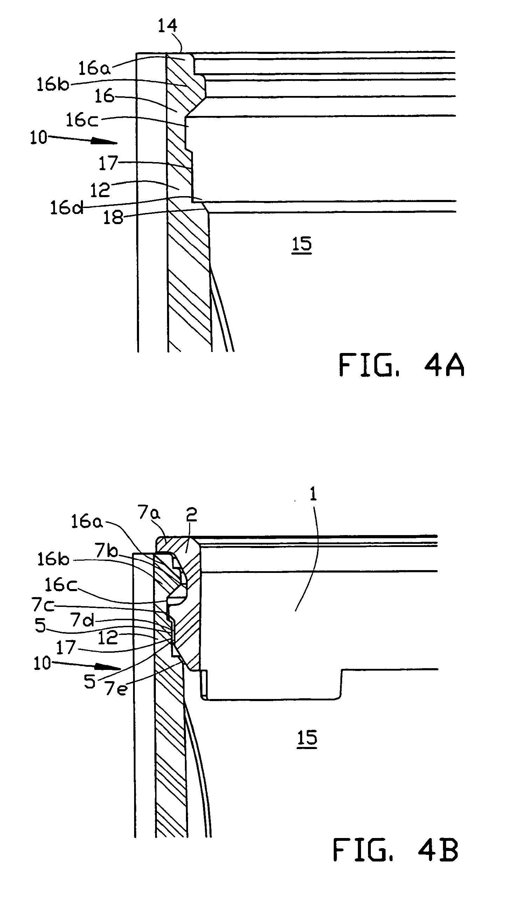

At the outer circumference the annular body 2 is provided with a circumferential profiling 7, for attachment in the box shown in figure 2. The circumferential profiling 7 comprises (figures 1B and 4B) a support edge 7a, a groove 7b, a rib 7c, a recessed strip 7d and an inclined edge 7e.

In an area situated at the location of the attachment means 3b, 4b and 3d, 4d the annular body 2 at the outer side is provided with a series of teeth 5 extending in circumferential direction over an angle a, which series of teeth is formed as one unity with the annular body 2. In this example the angle a is 45 degrees, symmetrically situated with respect to the attachment hole of the attachment plate 3b, as can be seen in figure 1B and in figure 3.

The box 10 shown in figure 2 is a flush-type box having centre line T, and comprises a circumferential wall 12 and a bottom wall 13, wherein the circumferential wall 12 at one side is provided with a hole or opening 11, which has centre line W and prior to use is closed off by a partition 8 that can be broken out using a tool and which by means of breakable connections 9 is formed as one unity with the box 10. The opening 11 and the partition 8 follow the curvature of the circumferential wall 12. At the side facing away from the bottom 13 the box 10 is provided with a circumferential edge 14 that defines an opening for access to the inside 15 of the box 10. At the location of the circumferential edge 14 a circumferential profiling 16 is provided at the inner surface of the circumferential wall 12. The profiling 16 comprises (see figures 4A and 4B) an upper edge 16a, a rib 16b, a groove 16c and a step 16d. In the lower half of the groove 16c, at regularly spaced apart positions in circumferential direction, solitary teeth 17 have been formed as one unity at the box 10. The teeth 17 are parallel to centre line T.

The box 10 has been manufactured through injection moulding from a suitable synthetic material, particularly polypropylene.

In this example the angle between the teeth 17 one to the other is 45 degrees, that means equal to the angle a over which the series of teeth 5 extends.

As is further shown in figure 2, the box 10 has a diameter D2 in the circular opening, and the mounting ring has an external diameter D 1, which exactly matches the diameter D2, so that the mounting ring can be inserted in the direction A into the opening of the box 10, wherein the profilings 16 and 7 interengage by snap action in order to keep the ring 1 in the opening of the box 10 (figure 4B). The edge 7a then supports on upper edge 16a, the rib 16b extends in groove 7b and the rib 7c extends in groove 1 6c and the inclined edge 7e is opposite the inclined edge 18, wherein the tooth 17 is in engagement with the series of teeth 5.

As shown in figure 3 the flush-type box 10 with mounting ring 1 is placed in a wall 20, in which a hole 21 has been made beforehand, having a bottom 22 and a circumferential wall 23, which hole 21 connects to a slot 24 for a wiring pipe (not shown).

The box 10 is placed in the hole 21, wherein after removal of the partition 8 the opening 11 is oriented towards/in front of the slot 24.

As shown in figure 3 the slot 24 is oriented deviating from the horizontal, over an angle β. This might result in the orientation of the attachment plates 3a-d also deviating from a horizontal - vertical orientation, having consequences for the orientation of the electrical components to be placed and the cover plates for them.

When placing the box 10 with mounting ring 1 as a whole or in case of later placement of the mounting ring 1 on the box 10, the electrical fitter is able, however, to set the angle between the orientation of the attachment plates 3a-d, particularly the holes provided therein, with respect to the centre line W of the opening or hole 11, by rotating the mounting ring 1 in the desired angular position with respect to the box 10, until the series of teeth 5 has/have been brought into engagement at the desired location(s) with the tooth/teeth 17 situated opposite therefrom at the inner surface of the circumferential wall 12. The series of teeth 5 of the mounting ring 1 is positioned such relative to the teeth on the box that two opposite teeth 17 at the box 10 are always in engagement with a series of teeth on the mounting ring. The force necessary for adjustment then is the same at all times. Due to the angle distances between the teeth 17 in relation to the angle length of the series of teeth 5, a tooth meshing can take place in any position, over 360 degrees. After such a placement in the box 10 the mounting ring 1 is secured against undesirable/inadvertent rotation about centre line S. The vertical - horizontal orientation of the U-line, between the attachment holes of the plates 3b, 3d is therefore maintained, also during use.

## Claims

1. Assembly of a box (10) for electric wirings, to be placed in a hole (21) in a wall (20) of a building, comprising a bottom wall (13) and a circumferential wall (12) extending circular around a centre line of the box (10), which define an inner space (15) for accommodating switch- and/or connection components for the electric wiring, wherein the circumferential wall (12) of the box (10) is provided with at least one hole (11), optionally provided with a break-out partition (8) for passage of electric wires that are optionally enveloped by a wiring pipe, wherein the box (10) at the side facing away from the bottom wall (13) is provided with an opening to the inside of the box (10), which opening is limited by an edge (14) of the circumferential wall (12), **characterised in that** the box (10) is spoutless, wherein the assembly further comprises a mounting ring (1) having attachment means (3a-d) for attaching the components, wherein the mounting ring (1) and the edge (14) are provided with first and second connection means (7, 16), respectively, for connecting the mounting ring (1) with the edge (14), wherein the first and second connection means (7, 16) are provided with first and second fixing means (5, 17), respectively, for fixing the mounting ring (1) at the edge (14) in a chosen orientation of the attachment means (3a-d) at the mounting ring (1) in which they take an oblique angle to the centre line of the hole (11), wherein the first and/or second fixing means (7, 16) comprise a series of teeth (5).

2. Assembly according to claim 1, wherein the second or first fixing means (16, 7), respectively, comprise one or several teeth (17) meshing with the series of teeth (5).

3. Assembly according to claim 2, wherein the series of teeth (5) is provided at the mounting ring (1).

4. Assembly according to claim 2 or 3, wherein the one or several teeth (17) are provided at the box (10).

5. Assembly according to any one of the preceding claims, wherein the first and second fixing means (7, 16) are adapted for fixing said orientation in an oblique angle in the range of at least approximately 0-45 degrees.

6. Assembly according to claim 5, wherein the first and second fixing means (7, 16) are adapted for fixing said orientation in an oblique angle in the range of at least approximately 0-90 degrees.

7. Assembly according to claim 5 or 6, wherein the angle in the said range is at least almost continuously variable.

8. Assembly according to any one of the preceding claims, when depending on claim 5 or 6, wherein the series of teeth (17) extends over approximately the said angle range of 0-45 degrees or 0-90 degrees.

9. Assembly according to claims 2 and 8, wherein some teeth (5, 17) are present which in circumferential direction are situated at said angle range at spaced apart positions.

10. Assembly according to any one of the preceding claims, wherein the first connection means (7) are formed as one unity with the mounting ring (1).

11. Assembly according to any one of the preceding claims, wherein the second connection means (16) are formed as one unity with the edge (14).

12. Assembly according to any one of the preceding claims, wherein the first and second connection means (7, 16) are adapted for entering into a snap connection for stopping the mounting ring (1) in a direction away from the bottom wall (13).

13. Assembly according to any one of the preceding claims, wherein the first and second fixing means (5, 17) have been formed in radially facing surfaces on the mounting ring (1) and the wall (12).

14. Assembly according to claim 2, or to any one of the preceding claims when dependent on claim 2, wherein the one or several teeth (17) of the second or first fixing means (17, 5), respectively, mesh with the series of teeth of the first and/or second fixing means (5, 17) in a radial direction with respect to the centre line of the box.

## Patentansprüche

1. Baugruppe einer Dose (10) für elektrische Kabel, die in einem Loch (21) in einer Wand (20) eines Gebäudes anzuordnen ist und eine untere Wand (13) sowie eine Umfangswand (12), die kreisförmig um eine Mittellinie der Dose (10) herum verläuft, umfasst, die einen Innenraum (15) zum Aufnehmen von Schalter- und/oder Verbindungskomponenten für das elektrische Kabel bilden, wobei die Umfangswand (12) der Dose (10) mit wenigstens einem Loch (11) versehen ist, das optional mit einem Ausbrechabschnitt (8) zum Hindurchtreten von elektrischen Kabeln versehen ist, die optional von einem Verkabelungsrohr umschlossen sind, wobei die Dose (10) an der Seite, die von der unteren Wand (13) weggewandt ist, mit einer Öffnung in das Innere der Dose (10) hinein versehen ist und die Öffnung durch einen Rand (14) der Umfangswand (12) begrenzt wird, **dadurch gekennzeichnet, dass** die Dose (10) keinen Stutzen aufweist und die Baugruppe des Weiteren einen Montagering (1) mit Anbringungseinrichtungen (3a-d) zum Anbringen der Bauteile aufweist, wobei der Montagering (1) und der Rand (14) mit ersten bzw. zweiten Verbindungseinrichtungen (7, 16) versehen sind, um den Montagering (1) mit dem Rand (14) zu verbinden, und die ersten sowie die zweiten Verbindungseinrichtungen (7, 16) mit ersten bzw. zweiten Fixiereinrichtungen (5, 17) zum Fixieren des Montagerings (1) an dem Rand (14) in einer ausgewählten Ausrichtung der Anbringungseinrichtungen (3a-d) an dem Montagering (1) versehen sind, in der sie einen schrägen Winkel zu der Mittellinie des Lochs (11) bilden, wobei die ersten und/oder zweiten Fixiereinrichtungen (7, 16) eine Reihe von Zähnen (5) umfassen.

2. Baugruppe nach Anspruch 1, wobei die zweiten oder die ersten Fixiereinrichtungen (16, 7) bzw. einen Zahn oder mehrere Zähne (17) umfasst/umfassen, der/die mit der Reihe von Zähnen (5) in Eingriff ist/sind.

3. Baugruppe nach Anspruch 2, wobei die Reihe von Zähnen (5) an dem Montagering (1) vorhanden sind.

4. Baugruppe nach Anspruch 2 oder 3, wobei der eine oder die mehreren Zähne (17) an dem Dose (10) vorhanden ist/sind.

5. Baugruppe nach einem der vorangehenden Ansprüche, wobei die ersten und die zweiten Fixiereinrichtungen (7, 16) zum Fixieren der Ausrichtung in einem schrägen Winkel im Bereich von wenigstens ungefähr 0 -45 Grad eingerichtet sind.

6. Baugruppe nach Anspruch 5, wobei die ersten und die zweiten Fixiereinrichtungen (7, 16) zum Fixieren der Ausrichtung in einem schrägen Winkel im Bereich von wenigstens ungefähr 0 - 90 Grad eingerichtet sind.

7. Baugruppe nach Anspruch 5 oder 6, wobei der Winkel in dem Bereich wenigstens nahezu stufenlos verändert werden kann.

8. Baugruppe nach einem der vorangehenden Ansprüche, wenn abhängig von Anspruch 5 oder 6, wobei die Reihe von Zähnen (17) ungefähr über den Winkelbereich von 0 -45 Grad oder 0 - 90 Grad verläuft.

9. Baugruppe nach den Ansprüchen 2 und 8, wobei einige Zähne (5, 17) vorhanden sind, die sich in der Umfangsrichtung in dem Winkelbereich an beabstandeten Positionen befinden.

10. Baugruppe nach einem der vorangehenden Ansprüche, wobei die ersten Verbindungseinrichtungen (7) als eine Einheit mit dem Montagering (1) ausgebildet sind.

11. Baugruppe nach einem der vorangehenden Ansprüche, wobei die zweiten Verbindungseinrichtungen (16) als eine Einheit mit dem Rand (14) ausgebildet sind.

12. Baugruppe nach einem der vorangehenden Ansprüche, wobei die ersten und die zweiten Verbindungseinrichtungen (7, 16) zum Eintreten in eine Einrastverbindung eingerichtet sind, um den Montagering (1) in einer Richtung von der unteren Wand (13) weg zu stoppen.

13. Baugruppe nach einem der vorangehenden Ansprüche, wobei die ersten und die zweiten Fixiereinrichtungen (5, 17) in radial gewandten Flächen an dem Montagering (1) und der Wand (12) ausgebildet worden sind.

14. Baugruppe nach Anspruch 2 oder einem der vorangehenden Ansprüche, wenn abhängig von Anspruch 2, wobei der eine Zahn oder die mehreren Zähne (17) bzw. der zweiten oder ersten Fixiereinrichtungen (17, 5) mit der Reihe von Zähnen der ersten und/oder zweiten Fixiereinrichtungen (5, 17) in einer radialen Richtung in Bezug auf die Mittellinie der Dose in Eingriff ist/sind.

## Revendications

1. Ensemble formant boîtier (10) pour des câblages électriques, devant être placé dans un trou (21) dans un mur (20) d'un bâtiment, comportant une paroi inférieure (13) et une paroi circonférentielle (12) s'étendant de manière circulaire autour d'un axe central du boîtier (10), qui définissent un espace intérieur (15) destiné à recevoir des composants de commutation et/ou de connexion pour le câblage électrique, dans lequel la paroi circonférentielle (12) du boîtier (10) comporte au moins un trou (11), facultativement muni d'un opercule défonçable (8) pour un passage de fils électriques qui sont facultativement enveloppés d'un fourreau de câblage, dans lequel le boîtier (10), sur le côté opposé à la paroi inférieure (13), comporte une ouverture vers l'intérieur du boîtier (10), laquelle ouverture est limitée par un bord (14) de la paroi circonférentielle (12), **caractérisé en ce que** le boîtier (10) est dépourvu de goulotte, dans lequel l'ensemble comporte également un anneau de montage (1) ayant des moyens d'attache (3a-d) pour attacher les composants, dans lequel l'anneau de montage (1) et le bord (14) sont munis de premiers et seconds moyens de connexion (7, 16), respectivement, pour connecter l'anneau de montage (1) avec le bord (14), dans lequel les premiers et seconds moyens de connexion (7, 16) sont munis de premiers et seconds moyens de fixation (5, 17), respectivement, pour fixer l'anneau de montage (1) sur le bord (14) dans une orientation choisie des moyens d'attache (3a-d) sur l'anneau de montage (1) dans laquelle ils prennent un angle oblique par rapport à l'axe du trou (11), dans lequel les premiers et/ou seconds moyens de fixation (7, 16) comportent une série de dents (5).

2. Ensemble selon la revendication 1, dans lequel les seconds ou premiers moyens de fixation (16, 7), respectivement, comportent une ou plusieurs dents (17) qui engrènent avec la série de dents (5).

3. Ensemble selon la revendication 2, dans lequel la série de dents (5) est agencée sur l'anneau de montage (1).

4. Ensemble selon la revendication 2 ou 3, dans lequel la dent ou plusieurs dents (17) sont agencées sur le boîtier (10).

5. Ensemble selon l'une quelconque des revendications précédentes, dans lequel les premiers et seconds moyens de fixation (7, 16) sont adaptés pour fixer ladite orientation à un angle oblique dans la plage d'au moins approximativement 0 - 45 degrés.

6. Ensemble selon la revendication 5, dans lequel les premiers et seconds moyens de fixation (7, 16) sont adaptés pour fixer ladite orientation à un angle oblique dans la plage d'au moins approximativement 0 - 90 degrés.

7. Ensemble selon la revendication 5 ou 6, dans lequel l'angle dans ladite plage est au moins pratiquement continuellement variable.

8. Ensemble selon l'une quelconque des revendications précédentes, lorsque dépendante de la revendication 5 ou 6, dans lequel la série de dents (17) s'étend sur approximativement ladite plage d'angle de 0 - 45 degrés ou de 0 - 90 degrés.

9. Ensemble selon les revendications 2 et 8, dans lequel certaines dents (5, 17) sont présentes, qui dans la direction circonférentielle, sont situées à ladite plage d'angle dans des positions écartées.

10. Ensemble selon l'une quelconque des revendications précédentes, dans lequel les premiers moyens de connexion (7) forment en un seul bloc avec l'anneau de montage (1).

11. Ensemble selon l'une quelconque des revendications précédentes, dans lequel les seconds moyens de connexion (16) sont formés en un seul bloc avec le bord (14).

12. Ensemble selon l'une quelconque des revendications précédentes, dans lequel les premiers et seconds moyens de connexion (7, 16) sont adaptés pour entrer en prise par encliquetage pour arrêter l'anneau de montage (1) dans une direction en s'écartant de la paroi inférieure (13).

13. Ensemble selon l'une quelconque des revendications précédentes, dans lequel les premiers et seconds moyens de fixation (5, 17) ont été formés dans des surfaces radialement opposées sur l'anneau de montage (1) et la paroi (12).

14. Ensemble selon la revendication 2, ou l'une quelconque des revendications précédentes lorsque dépendante de la revendication 2, dans lequel la dent ou plusieurs dents (17) des seconds ou premiers moyens de fixation (17, 5), respectivement, s'engrènent avec la série de dents des premiers et/ou seconds moyens de fixation (5, 17) dans une direction radiale par rapport à l'axe central.
